(19) Europäisches Patentamt
European Patent Office
Office européen des brevets

(11) **EP 0 969 192 B1**

(12) **EUROPÄISCHE PATENTSCHRIFT**

(45) Veröffentlichungstag und Bekanntmachung des Hinweises auf die Patenterteilung:
**05.01.2005 Patentblatt 2005/01**

(51) Int Cl.⁷: **F02C 7/228**

(21) Anmeldenummer: **98810600.1**

(22) Anmeldetag: **29.06.1998**

(54) **Verfahren zum Abgleichen des Brennstoffverteilsystems bei Gasturbinen mit mehreren Brennern**

Method to equalize the fuel distribution in a gas turbine with several burners

Méthode pour égaliser la distribution de carburant dans une turbine à gaz avec plusieurs brûleurs

(84) Benannte Vertragsstaaten:
**DE GB**

(43) Veröffentlichungstag der Anmeldung:
**05.01.2000 Patentblatt 2000/01**

(73) Patentinhaber: **ALSTOM Technology Ltd**
**5400 Baden (CH)**

(72) Erfinder:
• **Claesson, Ola, Dr.**
**90642 Umea (SE)**
• **Hellat, Jaan, Dr.**
**5406 Baden-Rütihof (CH)**

• **Kessler, Werner**
**8304 Wallisellen (CH)**
• **Reiss, Frank**
**79787 Lauchringen (DE)**
• **Strittmatter, Wilfert**
**79725 Laufenburg (DE)**
• **Tschirren, Stefan**
**4208 Nunningen (CH)**

(56) Entgegenhaltungen:
DE-A- 3 238 046        DE-A- 3 818 779
DE-A- 19 639 329      GB-A- 760 406
US-A- 2 657 702        US-A- 4 028 888
US-A- 5 119 636

## Beschreibung

TECHNISCHES GEBIET

Die vorliegende Erfindung bezieht sich auf das Gebiet der Gasturbinen. Solche Gasturbinen sind z.B. aus den Druckschriften US-A-5,024,055 oder US-A-5,319,931 oder US-A-5,373,692 bekannt. Sie betrifft ein Verfahren zum Abgleichen des Brennstoffverteilsystems dieser Gasturbine entsprechend dem Oberbegriff des Anspruchs 1.

STAND DER TECHNIK

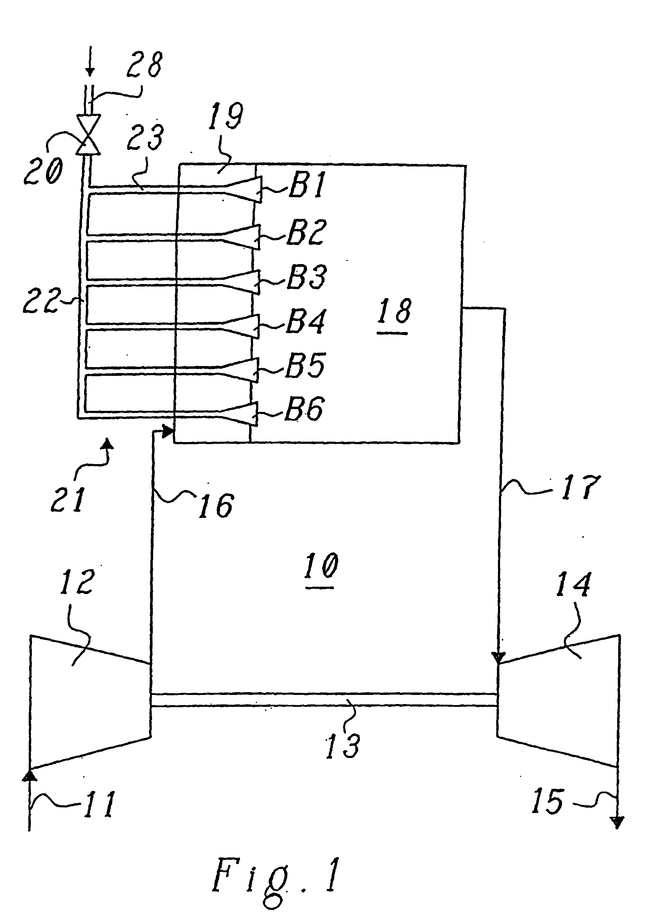

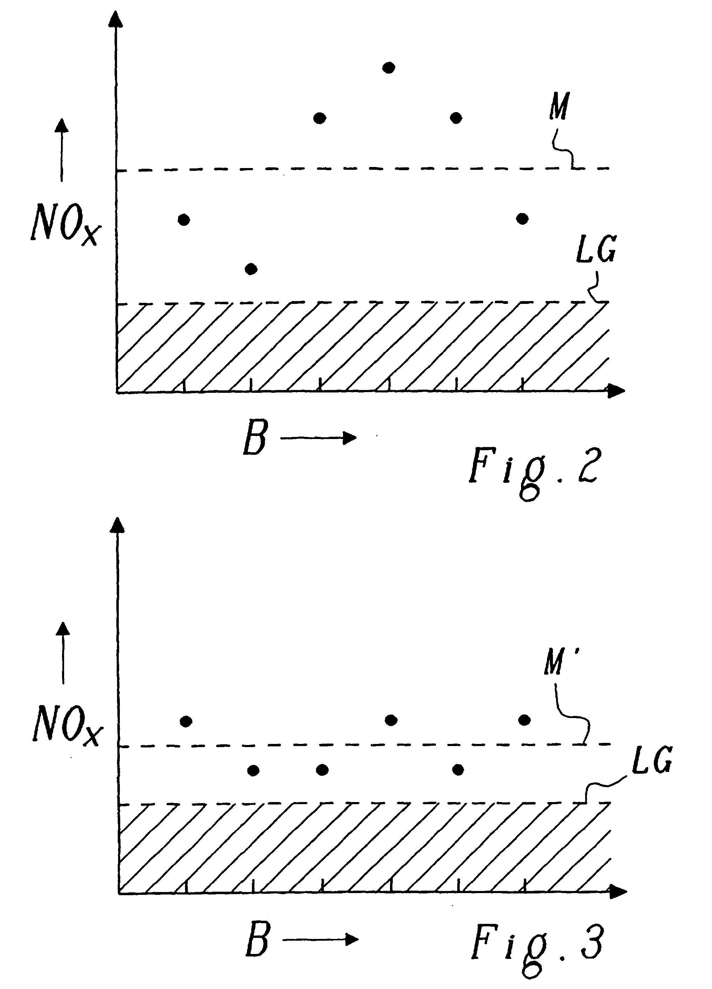

Häufig werden Gasturbinen grosser Leistung, wie sie in Kombikraftwerken Anwendung finden, mit mehreren Brennern betrieben. Beispiele für derartige Gasturbinen finden sich in den eingangs genannten Druckschriften. Kommerziell eingesetzte Gasturbinen dieser Art werden von der Anmelderin beispielsweise unter den Typenbezeichnungen GT 13E2, GT 24 oder GT 26 vertrieben. Ein schematisiertes Blockschaltbild einer derartigen Gasturbine ist in Fig. 1 dargestellt. Die Gasturbine 10 umfasst einen Kompressor 12 und eine Turbine 14, die üblicherweise auf einer gemeinsamen Welle 13 angeordnet sind. Zwischen Kompressor 12 und Turbine 14 ist eine Brennkammer 18 vorgesehen, in welcher eine Mehrzahl von (im Beispiel sechs) Brennern B1,..,B6 durch Verbrennung eines flüssigen oder gasförmigen Brennstoffes heisse Verbrennungsgase erzeugen. Die Brenner B1,..,B6 können beispielsweise mit herausziehbaren Brennerlanzen bestückt sein, die den Brennstoff und ggf. Verbrennungsluft zum Eindüsen in den Brenner einführen. Die verschiedenen Brenner B1,..,B6 der Gasturbine 10 werden aus einer (nicht gezeigten) Brennstoffquelle über ein Brennstoffverteilsystem 21 mit Brennstoff versorgt. Dem Brennstoffverteilsystem 21 wird der Brennstoff über eine zentrale Brennstoffzuführung 28 und ein oder mehrere Brennstoffregelventile 20 zugeführt. Von der gemeinsamen Verteilleitung 22 gehen einzelne Stichleitungen 23 zu den Brennern B1,..,B6. Die für die Verbrennung des Brennstoffes notwendige Verbrennungsluft wird von dem Kompressor 12 über eine Luftzufuhr 11 angesaugt, verdichtet, und anschliessend über einen Druckluftkanal 16 in ein Plenum 19 eingespeist, von wo aus sie durch entsprechende Öffnungen in die Brenner B1,..,B6 bzw. Brennstofflanzen gelangt. Die heissen Verbrennungsgase aus der Brennkammer 18 gelangen über einen Heissgaskanal 17 in die Turbine 14, wo sie in einer oder mehreren Stufen Arbeit verrichten und anschliessend an einem Abgasauslass 15 der Turbine 14 zur weiteren Verwendung (z. B. zur Erzeugung von Dampf in einem Abhitzekessel) zur Verfügung stehen.

Die Berechnung und Auslegung des Brennstoffverteilsystems 21 und der Luftzufuhr für die einzelnen Brenner B1,..,B6 zielen auf eine homogene Verteilung von Luft und Brennstoff auf die einzelnen Brenner.

Trotz aller Anstrengungen, alle Brenner B1,..,B6 bzw. die Brenner einer Gruppe, die vom gleichen Regelventil mit Brennstoff versorgt werden, mit möglichst gleichem Brennstoff-Luft-Gemisch zu betreiben, gelingt dies in der Praxis nur näherungsweise. Je nach Qualität der Auslegung, Qualität der Fertigung und Grösse der System-Toleranzen stellt sich eine mehr oder weniger grosse Ungleichverteilung ein. Es ergeben sich durch Unterschiede im Leitungssystem des Brennstoffverteilsystems 21 meist lokal unterschiedliche Brennstoffmassenströme an den einzelnen Brennern, welche nicht oder nur global korrigiert werden. Die einzelnen Brenner B1,..,B6 werden mit unterschiedlichen Brennstoff-Luft-Verhältnissen (Brenner-$\Phi$ bzw. Luftzahl) betrieben. Somit ergeben sich brennerspezifische, inhomogene Flammentemperaturen und damit unterschiedliche Emissionswerte und auch unterschiedliche Turbineneintrittstemperaturen (TIT), d.h. die individuellen Brennerwerte (wie z.B. NOx-Emission, Temperatur) liegen über bzw. unter einem Mittelwert. In Fig. 2 ist eine derartige beispielhafte Verteilung der NOx-Werte um den Mittelwert M dargestellt. Die Brenner B1, B2 und B6 liegen unterhalb des Mittelwertes M, Die Brenner B3, B4 und B5 oberhalb. Eingezeichnet ist auch die magere Löschgrenze LG, unterhalb derer ein stabiler und sicherer Betrieb der Brenner nicht mehr möglich ist.

Damit nun die nach unten vom Mittelwert abweichenden (mager betriebenen) Brenner deutlich oberhalb der Löschgrenze LG bleiben, und damit die Maschine sicher und stabil betrieben werden kann, muss der über das Brennstoffregelventil 20 einzustellende Mittelwert M deutlich über der mageren Löschgrenze LG gewählt werden. Es laufen also brennstoffangereicherte Brenner (B3, B4, B5) neben mageren Brennern (B1, B2, B6). Im Extremfall müssen die brennstoff-angereicherten Brenner die mageren Brenner sogar in der Verbrennung stützen (externe Pilotierung). Schlussendlich führt das dazu, dass der sich so einstellende Emissions-Mittelwert M deutlich vom erreichbaren Minimalwert (Einzelbrenner-Nachweis im Einzelbrenner-Versuch) abweicht. Unter Umständen kann sich daher bei der Mehrbrennerkonfiguration eine erheblich verschlechterte magere Löschgrenze gegenüber dem Einzelbrenner ergeben. Gleiches gilt auch für das Temperaturprofil. Das eigentliche Ziel, nämlich mit einer homogenen Verbrennung auch ein homogenes Emissions- und Temperaturprofil - insbesondere bei Ringbrennkammern - zu erreichen, wird in der Praxis wegen Fertigungstoleranzen, Genauigkeit der Auslegung und dgl. bisher nur näherungsweise erreicht. Für eine zuverlässige (Grob-)Einstellung der Gasturbine ist dies zwar ausreichend. Das vorhandene Potential der Gasturbinen mit Mehrfachbrenneranordnungen wird so jedoch sicher nicht voll ausgenutzt.

In der US-A-5,024,055 wird eine Gasturbine mit Mehrfachbrenneranordnung beschrieben, bei welcher am Turbinenauslass mittels verteilt angeordneter Sensoren die unverbrannten Kohlenwasserstoffe (UHCs) der einzelnen Brenner detektiert werden. Die gemessenen Werte werden dazu verwendet, über einzelne Regelventile in den Brennstoffzuleitungen (Stichleitungen) zu den Brennern das Brennstoff-Luft-Verhältnis für jeden einzelnen Brenner auf seinen optimalen Wert einzuregeln. Zusätzlich findet auch eine Regelung der Luftzufuhr statt. Obgleich durch diese Regelung dauerhaft weitgehend optimale Verbrennungsverhältnisse in den einzelnen Brenner urreichbar sind, ist diese Regelung mit ihrer Vielzahl an Sensoren und insbesondere Regelventilen (pro zweistufigem Brenner zwei Regelventile) nicht nur ausserordentlich aufwendig, sondern auch störungsanfällig.

In der US-A-5,319,931 wird eine Methode zum Trimmen des Brennstoff-Luft-Verhältnisses der einzelnen Brenner bei einer Gasturbine mit zweistufiger Mehrfachbrenneranordnung und inhomogener Luftzufuhr vorgeschlagen, bei der in jeder der Brennstoffzuleitungen (Stichleitungen) zu den Brennern eine Trimmeinheit angeordnet ist, die ein verstellbares Ventil enthält. Um die ungleichen Betriebsparameter der Brenner, die durch eine ungleiche Luftzufuhr entstehen, auszugleichen, wird nach Massgabe bestimmter Messwerte (für Brennkammerdruck, Temperatur und Brennstoffmassenstrom) die Brennstoffzufuhr zu den einzelnen Brennern mittels der Trimmeinrichtung per Hand oder automatisch nachgetrimmt. Das Trimmen bezieht sich dabei auf eine ungleiche Luftzufuhr, nicht jedoch auf eine ungleiche Brennstoffzufuhr. Darüber hinaus wird auch in diesem Fall eine Vielzahl von mit beweglichen Teilen ausgestatteten, störanfälligen Ventilen eingesetzt. Zusätzlich müssen beim automatischen Betrieb in den Trimmeinheiten noch verschiedene Blenden angeordnet werden, um eine sichere und genaue Regelung zu gewährleisten.

Schliesslich ist aus der US-A-5,373,692 ein Trimmsystem zur Minimierung der NOx-Emissionen einer Gasturbine mit Mehrfachbrenneranordnung bekannt, bei welchem in den Brennstoffzuleitungen (Stichleitungen zu den einzelnen Brennern) jeweils zwei parallelgeschaltete Regelventile angeordnet sind, die von einer zentralen Steuerung nach Massgabe der Messwerte aus einem NOx-Sensor betätigt werden. Das Hauptventil der Parallelschaltung dient dabei der Grundeinstellung, während das Nebenventil für das Trimmen vorgesehen ist. Auch in diesem Fall ergibt sich durch die zwei Ventile pro Brenner ein erheblicher apparativer Aufwand und eine erhöhte Störanfälligkeit.

DE-A1-3 238 046 betrifft ein Kraftstoffverteilersystem, insbesondere für eine Gasturbine, mit einem Kraftstoffverteilerventil, welches eine einzige Kraftstofffeinlassöffnung und mehrere Kraftstoffauslassöffnungen besitzt, von denen jede mit einer zugeordneten Kraftstoffleitung verbunden ist, die zu einer Kraftstoffdüse führt. Das Kraftstoffverteilerventil besitzt dabei identische Dosieröffnungen zum Aufteilen dosierter Kraftstoffströme auf die einzelnen Leitungen und Düsen. Dabei sind erfindungsgemäss stromabwärts von den einzelnen Dosieröffnungen Abstimmanordnungen vorgesehen, welche einen Stopfen aufweisen, der justiert werden kann, während das System arbeitet, das heisst während die Kraftstoffförderung und -verteilung stattfindet, um so das System während des Betriebs abzugleichen.

DE-A-3 818 799 offenbart ein Brennstoffverteilungseinrichtung. Für eine laminare Strömung sorgende Röhren mit gleichförmigen Innendurchmesser und Länge sind dabei einzeln in jede von mehreren Brennstoffleitungen eingefügt, die von einem Verteiler zu den verschiedenen Brennstoffinjektoren in einer Gasturbinenbrennkammer führen, um für eine gleichförmige Brennstoffverteilung über einem weiten Bereich von Brennstoffströmungsgeschwindigkeiten zu sorgen.

US-A-5,119,636 offenbart einen Brennstoffinjektor einer Turbine.

DE-A-196 39 329 offenbart ein Verfahren zur Optimierung eines Massenstromes innerhalb eines Brennstoffverteilungssystems und eines nachgeschalteten Brennersystems. Bei diesem Verfahren wird in einem ersten Schritt ein Zielwert der druckmässigen Totalabweichung des Massenstromes innerhalb der beiden Systeme definiert. Aufgrund dieses Zielwertes erfolgt dann eine Festlegung derjenigen Komponenten der beiden Systeme, welche die geringste Streuung aufweisen. Daraus erfolgt die Festlegung der Streuungsbandbreite der einzelnen Komponenten beider Systeme, wobei nach deren Herstellung eine Selektion und/oder Zuordnung vorgenommen wird, mit dem finalen Zweck, die zielwertmässig definierte Gleichförmigkeit zu gewährleisten, dergestalt, dass der Betrieb der Brenner unter allen verbrennungstechnischen Aspekten optimal abläuft.

DARSTELLUNG DER ERFINDUNG

Es ist daher Aufgabe der Erfindung, ein Verfahren zum Abgleichen des Brennstoffverteilsystems einer Gasturbine mit Mehrfachbrenneranordnung zu schaffen, bei welcher die durch Ungleichheiten im Brennstoffverteilsystem bedingten unterschiedlichen Brennstoffmassenströme der einzelnen Brenner durch einfache, leicht auch nachträglich zu installierende, sowie wirkungsvolle und störungssichere Mittel kompensiert werden.

Das erfindungsgemässe Verfahren zum Abgleichen des Brennstoffverteilsystems einer Gasturbine gemäss dem Oberbegriff des Anspruchs 1 ist dadurch gekennzeichnet, dass der an den einzelnen Brennern anstehende Brennstoffdruck bzw. Anspeisedruck relativ zu einem feststehenden Referenzdruck gemessen wird, und dass das Drosselorgan nach Massgabe der gemessenen Druckdifferenzen zwischen dem Anspeisedruck und dem Referenzdruck ausgewählt wird. Die Druckmessung kommt ohne speziell für den Einsatz im Heissgas konstruierte Sensoren aus, und kann prinzipiell auch beim Stillstand der Gasturbine bzw. vor der Inbetriebnahme (z.B. durch eine Inertgasmessung) einmalig durchgeführt werden.

Die Erfindung geht dabei von der Erkenntnis aus, dass es einerseits meist einfacher ist, den Brennstoffmassenstrom anzupassen und zu homogenisieren, und dass andererseits bei den meisten Gasturbinen eine annähernd gleichmässige Luftzufuhr zu den Einzelbrennern gewährleistet ist, so dass unabhängig von der Luftzufuhr in den meisten Fällen eine bedeutende Verbesserung allein durch die Vergleichmässigung der Brennstoffzufuhr zu erreichen ist. Der Kern der Erfindung besteht darin, bei denjenigen Brennern, die durch das Brennstoffverteilsystem mit mehr Brennstoff versorgt werden und damit im Vergleich zum Mittelwert mit einem fetteren Gemisch betrieben werden, durch Einbau einer dauerhaft fixierten Drosselstelle die Brennstoffzufuhr dauerhaft und feststehend zu drosseln, so dass die Streuung der Brenner um den Mittelwert insgesamt geringer wird. Vorteilhaft ist dabei, dass konstruktiv bedingte, feststehende Ungleichmässigkeiten im Brennstoffverteilsystem so auf einfache Weise dauerhaft korrigiert werden und zu einer bleibenden Verbesserung der Betriebsparameter führen, ohne die Störanfälligkeit von Regelventilen zu besitzen.

Eine erste Ausführungsform des erfindungsgemässen Verfahrens ist dadurch gekennzeichnet, dass die Brenner in eine gemeinsame Brennkammer münden, und dass als Referenzdruck der Druck in der Brennkammer (Brennrauminnendruck) gemessen wird. Nachteilig ist dabei, dass diese Messungen während des Betriebes durchgeführt werden müssen.

Alternativ dazu zeichnet sich eine zweite, bevorzugte Ausführungsform des Verfahrens nach der Erfindung dadurch aus, dass als Referenzdruck der Anspeisedruck eines der Brenner verwendet wird.

Besonders geringe Kosten und eine einfache Montage ergeben sich, wenn gemäss einer ersten bevorzugten Ausführungsform der Erfindung das Drosselorgan als Blende ausgebildet ist. Eine solche Blende mit ausgewähltem Durchmesser der Öffnung ist kompakt, mechanisch robust und unempfindlich, einfach herzustellen, und mit äusserst geringem Platzaufwand an geeigneter Stelle des Brennstoffverteilsystems (auch noch nachträglich) zu montieren.

Besonders günstig ist es, wenn gemäss einer bevorzugten Weiterbildung dieser Ausführungsform das Brennstoffverteilsystem eine gemeinsame Verteilleitung umfasst, von welcher Verteilleitung Stichleitungen zu den einzelnen Brennern abgehen und mittels eines verschraubbaren Leitungsanschlusses an den jeweiligen Brenner angeschlossen sind, wenn die Blende innerhalb des zugehörigen Leitungsanschlusses angeordnet ist, und wenn die Blende als Lochscheibe ausgebildet und innerhalb des Leitungsanschlusses lösbar angeordnet ist.

KURZE ERLÄUTERUNG DER FIGUREN

Die Erfindung soll nachfolgend anhand von Ausführungsbeispielen im Zusammenhang mit den beigefügten Zeichnungen näher erläutert werden. Es zeigen

Fig. 1 in einem schematisierten Blockschaltbild eine Gasturbine mit Mehrfachbrenneranordnung gemäss dem Stand der Technik, wie sie auch der Erfindung zugrundeliegt;

Fig. 2 eine beispielhafte Verteilung der NOx-Werte mehrerer Brenner einer Gasturbine nach Fig. 1 mit einer durch Ungleichheiten im Brennstoffverteilsystem bedingten grossen Streuung der Werte um einen Mittelwert M;

Fig. 3 eine zu Fig. 2 vergleichbare Darstellung mit durch die Erfindung verringerter Streuung der Werte um einen abgesenkten Mittelwert M';

Fig. 4 alternative Messanordnungen zur Durchführung des erfindungsgemässen Verfahrens bei einem Brennstoffverteilsystem gemäss Fig. 1; und

Fig. 5 in einer vergrösserten Darstellung eine am einzelnen Brenner bzw. an der einzelnen Brennerlanze angeschraubte Stichleitung mit eingesetzter Blende gemäss einem bevorzugten Ausführungsbeispiel der Erfindung.

WEGE ZUR AUSFÜHRUNG DER ERFINDUNG

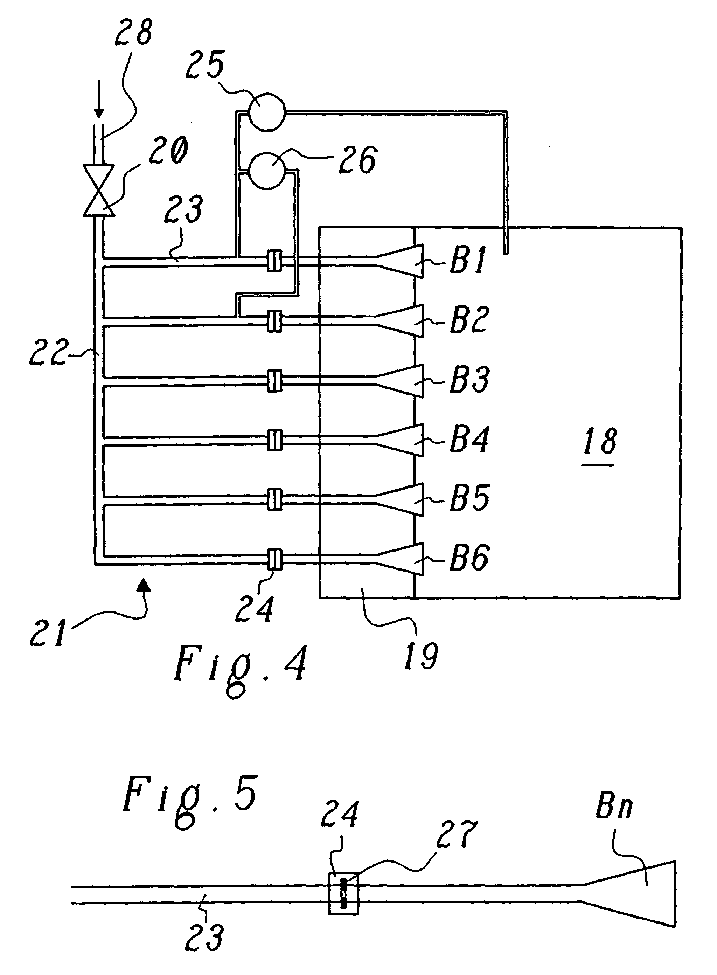

Zur Ausführung der Erfindung, nämlich zum Vergleichmässigen der Brennstoffzufuhr zu den Brennern mittels eingebauter Drosselorgane, muss zunächst die vorhandene Brennstoffverteilung auf die einzelnen Brenner (B1,..,B6 in Fig. 4) ermittelt bzw. gemessen werden, um die individuelle Versorgung der einzelnen Brenner mit dem (gasförmigen) Brennstoff festzustellen. Grundsätzlich ist es denkbar, als Messgrösse hierfür - sofern bereits vorhanden - die Abgastemperatur oder die NOx-Emission hinter der Turbine zu verwenden. In der Turbine erfolgt nur eine Verdrehung der lokal erzeugten Verbrennungsindikatoren (Temperatur, Emissionen), jedoch keine Vermischung. Deshalb kann unter Kenntnis und Berücksichtigung der Verdrehung direkt auf die lokale Verbrennung geschlossen werden. Bei entsprechender Auflösung kann dann direkt die Verbrennung einzelner Brenner beeinflusst und korrigiert werden. Voraussetzung wäre eine lokale Messung von Abgastemperatur und/oder Emissionen durch im Abgasdiffusor verteilt angeordnete Messstutzen. Um den Aufwand an Messeinrichtungen gering zu halten, wäre ein zyklisches Umschalten zwischen den einzelnen Messstutzen möglich.

Mit deutlich geringerem Aufwand wird jedoch gemäss der Erfindung die Bestimmung der Ungleichverteilung durch einfache Druckdifferenz-Messungen realisiert. Hierzu kommen insbesondere zwei Verfahren in Betracht:

Beim einen Verfahren wird die brennstoffseitige Druckdifferenz aller Brenner

$$\Delta p(Bn) = p(Bn) - p_{BK}, \qquad n=1,..,6$$

gemessen, wobei p(Bn) der Anspeisedruck des n-ten Brenners direkt vor dem Brenner Bn in der jeweiligen Stichleitung 23 ist, und $p_{BK}$ der Druck in der Brennkammer 18 (Brennrauminnendruck). Der Brennrauminnendruck kann z.B. an einer günstigen Referenzdruckmessstelle in der Brennkammer 18 gemessen werden. Diese Art des Verfahrens ist in Fig. 4 symbolisch für den ersten Brenner B1 durch das Differenzdruckmessgerät 25 dargestellt.

Beim anderen Verfahren ist eine Referenzdruckmessstelle in der Brennkammer nicht unbedingt erforderlich. In diesem Fall werden nämlich alle Anspeisedrücke gegen den Anspeisedruck eines Referenzbrenners gemessen:

$$\Delta p(Bn,1) = p(Bn) - p(B1), \qquad n=2,..,6,$$

wenn der Brenner B1 beispielsweise als Referenzbrenner verwendet wird. Diese Art des Verfahrens ist in Fig. 4 symbolisch für den Brenner B2 durch das Differenzdruckmessgerät 26 dargestellt.

Um nun eine Vergleichmässigung der Brennstoffverteilung zu erhalten, muss die Verteilung beeinflusst werden. Es muss also der Brennstoff, den einige Brenner zuviel erhalten, denjenigen Brennern zugeführt werden, die zu wenig erhalten. Das geschieht dadurch, dass erfindungsgemäss der Druckverlust bei denjenigen Brennern durch Einfügen von Drosselorganen erhöht wird, die zuviel Brennstoff erhalten. Dies kann entweder durch zusätzliche (passive) Drosselorgane in den Stichleitungen oder in den Brennern bzw. Brennerlanzen selbst (Lanzenanpassung) erfolgen. Die Drosselung der brennstoffreichen Brenner wird nun solange verfeinert und angepasst, bis die Inhomogenitäten deutlich verringert sind und über alle Brenner in etwa die gleiche Druckdifferenz gemessen wird. Dann kann davon ausgegangen werden, dass eine deutliche Verbesserung in der Gleichverteilung der Brennstoffzufuhr und damit des Brenner-Φs erfolgt. Die Verbrennung sollte dann bei allen Einzelbrennern mit ähnlichen Parametern (insb. der gleichen Flammentemperatur) erfolgen.

Wenn alle Brenner B1,..,B6 auf die eine oder andere Weise durchgemessen sind, werden diejenigen Brenner mit den höheren Druckdifferenzen (und entsprechend höheren Massendurchflüssen) durch Einfügen eines entsprechend bemessenen Drosselorgans vor dem Brenner in ihrem Brennstoffzufluss gezielt gedrosselt. Werden im Beispiel der Fig. 2 z.B. die Brenner B3, B4 und B5 gedrosselt, werden dadurch deren NOx-Werte abgesenkt und es ergibt sich eine Verteilung gemäss Fig. 3 mit einem gegenüber Fig. 2 insgesamt abgesenkten Mittelwert M'.

Die Drosselung der einzelnen Brenner erfolgt vorzugsweise gemäss Fig. 5 dadurch, dass an der Stelle, an welcher die zugehörige Stichleitung 23 an den Brenner bzw. die Brennerlanze mittels eines lösbar verschraubten Leitungsanschlusses 24 angeschlossen ist, eine Blende 27 in Form einer Lochscheibe mit definierter zentraler Öffnung eingesetzt wird. Dazu wird die Verschraubung des Leitungsanschlusses 24 gelöst, die Blende 27 zweischen Ende der Stichleitung 23 und dem Schraubanschluss des Brenners eingesetzt und der Leitungsanschluss 24 anschliessend wieder verschraubt. Es ist jedoch auch denkbar, die Drosselung innerhalb der Brennerlanze selbst vorzunehmen. Auf diese einfache und sichere Weise ist es möglich, die Maschine insgesamt auf bessere Emissionswerte einzustellen. Die Gasturbine kann dann näher an der Löschgrenze LG, also näher am unteren NOx-Grenzwert, betrieben werden. Gleichzeitig können (bei Ringbrennkammern) bessere Temperatur- und Emissions-Umfangprofile gemessen werden.

Die Erfindung kann mit Vorteil sowohl bei Eingruppen- als auch Mehrgruppenkonzepten angewendet werden. Sind die Brenner einer Maschine in mehrere Gruppen eingeteilt, werden u.U. nicht alle Gruppen mit dem gleichen Brenner-Φ betrieben. Dennoch wird die erfindungsgemässe Massnahme auch bei einem Mehrgruppenkonzept eine deutliche Verbesserung von Emissionen und Temperaturprofil bewirken. Nur müssen dann die einzelnen Gruppen ggf. separat vermessen und vergleichmässigt werden.

Die Erfindung kann auch dann von besonderer Bedeutung und Wirksamkeit sein, wenn sich die Gaszusammensetzung (z.B. niedrigerer Brennwert) oder die Gastemperatur (z.B. durch nachträglichen Einsatz einer Gasvorwärmung) ändern. Durch den dann grösseren Volumenstrom wirken sich Inhomogenitäten im Brennstoffverteilsystem noch deutlicher aus und können zu wesentlich schlechteren Emissionswerten und Temperaturprofilen führen. Der erfindungsgemässe Eingriff in die Brennstoffzuführung kann dies wieder korrigieren, so dass Emissionen und Temperaturprofil wieder deutlich bessere Werte erreichen.

Schliesslich sei noch darauf hingewiesen, dass die Messung der Druckdifferenzen bezüglich der einzelnen Brenner auch zur Überwachung bzw. Fehleranalyse der Maschine herangezogen werden kann. So kann z.B. durch eine Messung und einen anschliessenden Vergleich mit einer Ersteinstellmessung ein Fehler im Brennstoffverteilsystem ermittelt werden (z.B. ein verstopfter Brennstofffilter vor einzelnen Brennern oder Sektoren).

Insgesamt ergibt sich mit der Erfindung eine einfache, sichere und wirkungsvolle Massnahme zur Verbesserung der Emissionswerte und Temperaturprofile von Gasturbinen mit Mehrfachbrenneranordnungen.

BEZUGSZEICHENLISTE

| | |
|---|---|
| 10 | Gasturbine |
| 11 | Luftzufuhr |
| 12 | Kompressor |
| 13 | Welle |
| 14 | Turbine |
| 15 | Abgasauslass |
| 16 | Druckluftkanal |
| 17 | Heissgaskanal |
| 18 | Brennkammer |
| 19 | Plenum |
| 20 | Brennstoffregelventil |
| 21 | Brennstoffverteilsystem |
| 22 | Verteilleitung |
| 23 | Stichleitung |
| 24 | Leitungsanschluss |
| 25,26 | Differenzdruckmessgerät |
| 27 | Blende |
| 28 | Brennstoffzuführung |
| B1,..,B6;Bn | Brenner |
| LG | magere Löschgrenze |
| M,M' | Mittelwert |

**Patentansprüche**

1. Verfahren zum Abgleichen des Brennstoffverteilsystems (21) einer Gasturbine, welche eine Mehrzahl von einzelnen Brennern (B1,..,B6; Bn) ausweist,

   - welche Brenner (B1, ..., B6, Bn) an ein Brennstoffverteilsystem (21) angeschlossen sind und über das Brennstoffverteilsystem (21) aus einer gemeinsamen Brennstoffzuführung (28) mit Brennstoff versorgt werden,
   - wobei das Brennstoffverteilsystem (21) eine gemeinsame Verteilleitung (22) umfasst, von welcher Verteilleitung (22) Stichleitungen (23) zu den einzelnen Brennern (B1,..,B6; Bn) abgehen,
   - wobei in den Stichleitungen (23) vor wenigstens einem der Brenner (B1,..,B6; Bn) ein feststehendes, den Brennstoffmassenstrom zu dem wenigstens einen Brenner (B1,..,B6; Bn) bestimmendes Drosselorgan (27) angeordnet ist, und
   - wobei die Querschnittsreduktion des Drosselorgans (27) so ausgewählt ist, dass bestehende Ungleichheiten im Brennstoffverteilsystem (21) hinsichtlich der Brennstoffmassenströme zu den einzelnen Brennem (B1,..,B6; Bn) verringert werden,

**dadurch gekennzeichnet, dass**

   - der an den einzelnen Brennern (B1,..,B6; Bn) anstehende Brennstoffdruck bzw. Anspeisedruck relativ zu einem feststehenden Referenzdruck gemessen wird, und
   - dass das Drosselorgan (27) nach Massgabe der gemessenen Druckdifferenzen zwischen dem Anspeisedruck und dem Referenzdruck ausgewählt wird.

2. Verfahren nach Anspruch 1,
   **dadurch gekennzeichnet, dass**
   die Brenner (B1,..,B6; Bn) in eine gemeinsame Brennkammer (18) münden, und dass als Referenzdruck der Druck in der Brennkammer (18) gemessen wird.

3. Verfahren nach Anspruch 1,
   **dadurch gekennzeichnet, dass**
   als Referenzdruck der Anspeisedruck eines der Brenner (B1,..,B6; Bn) verwendet wird.

4. Verfahren nach einem der Ansprüche 1 bis 3,
   **dadurch gekennzeichnet, dass** bestehende Ungleichheiten im Brennstoffverteilsystem (21) hinsichtlich der Brennstoffmassenströme zu den einzelnen Brennern (B1,..,B6; Bn) durch das Einsetzen einer Blende (27) in eine Stichleitung (23) verringert werden.

5. Verfahren nach Anspruch 4,
   **dadurch gekennzeichnet, dass**
   eine Stichleitung (23) an einem einzelnen Brenner (B1, ..., B6, Bn) mittels eines lösbaren Leitungsanschlusses (24) angeschlossen ist und die Verschraubung eines Leitungsanschlusses (24) gelöst wird, die Blende (27) zwischen Ende der Stichleitung (23) und dem Schraubanschluss des Brenners (B1, ..., B6, Bn) eingesetzt wird, und der Leitungsanschluss (24) anschliessend wieder verschraubt wird.

**Claims**

1. Method for balancing the fuel distribution system (21) of a gas turbine which has a plurality of individual burners (B1,...,B6; Bn),

   - which burners (B1,...,B6, Bn) are connected to a fuel distribution system (21) and are supplied with fuel via the fuel distribution system (21) from a common fuel supply (28),
   - the fuel distribution system (21) comprising a common distribution line (22), from which distribution line (22) branch lines (23) to the individual burners (B1,...B6; Bn) emanate,

- the branch lines (23) having arranged in them, upstream of at least one of the burners (B1,..., B6; Bn), a fixed throttle member (27) determining the fuel mass flow to the at least one burner (B1, ...B6; Bn), and

- the reduction in cross section of the throttle member (27) being selected such that existing inequalities in the fuel distribution system (21) as regards the fuel mass flows to the individual burners (B1,..., B6; Bn) are reduced,

**characterized in that**

- the fuel pressure or feed pressure prevailing at the individual burners (B1,...B6; Bn) is measured in relation to a fixed reference pressure, and **in that**

- the throttle member (27) is selected in accordance with the measured pressure differences between the feed pressure and the reference pressure.

2. Method, according to Claim 1, **characterized in that** the burners (B1,...,B6; Bn) open into a common combustion chamber (18), and **in that** the pressure in the combustion chamber (18) is measured as the reference pressure.

3. Method, according to Claim 1, **characterized in that** the feed pressure of one of the burners (B1,..., B6; Bn) is used as the reference pressure.

4. Method according to any of Claims 1 to 3, **characterized in that** existing inequalities in the fuel distribution system (21) as regards the fuel mass flows to the individual burners (B1,...,B6; Bn) are reduced by the use of a diaphragm (27) in a branch line (23).

5. Method according to Claim 4, **characterized in that** a branch line (23) is connected to an individual burner (B1,...,B6; Bn) by means of a releasable line connection (24), and the screwed connection of a line connection (24) is released, the diaphragm (27) is inserted between the end of the branch line (23) and the screw connection of the burner (B1,...B6; Bn), and the line connection (24) is subsequently screw-connected again.

## Revendications

1. Procédé pour égaliser le système de distribution de carburant (21) d'une turbine à gaz qui présente une pluralité de brûleurs individuels (B1, .., B6 ; Bn),

- lesquels brûleurs (B1, ..., B6 ; Bn) sont raccordés à un système de distribution de carburant (21) et sont alimentés en carburant par le biais du système de distribution de carburant (21) à partir d'une alimentation en carburant (28),

- le système de distribution de carburant (21) comprenant une conduite de distribution commune (22) depuis laquelle conduite de distribution (22) partent des conduites de branchement (23) allant aux brûleurs individuels (B1, .., B6 ; Bn),

- un organe d'étranglement (27) fixe, déterminant le courant massique de carburant à l'au moins un brûleur (B1, .., B6 ; Bn) étant disposé dans les conduites de branchement (23) avant au moins un brûleur (B1, .., B6 ; Bn), et

- la réduction de section transversale de l'organe d'étranglement (21) étant choisie de telle sorte que les inégalités existant dans le système de distribution de carburant (21) en ce qui concerne les courants massiques de carburant aux brûleurs individuels (B1, .., B6 ; Bn) soient réduites,

**caractérisé en ce que**

- la pression de carburant ou la pression d'alimentation appliquée aux brûleurs individuels (B1, .., B6 ; Bn) est mesurée par rapport à une pression de référence fixe, et

- **en ce que** l'organe d'étranglement (27) est choisi en fonction de la mesure des différences de pression mesurées entre la pression d'alimentation et la pression de référence.

2. Procédé selon la revendication 1, **caractérisé en ce que** les brûleurs (B1, .., B6 ; Bn) débouchent dans une chambre de combustion commune (18) et **en ce que** l'on mesure comme pression de référence la pression dans la chambre de combustion (18).

3. Procédé selon la revendication 1, **caractérisé en ce que** l'on utilise comme pression de référence la pression d'alimentation de l'un des brûleurs (B1, .., B6 ; Bn).

4. Procédé selon l'une quelconque des revendications 1 à 3, **caractérisé en ce que** les inégalités existant dans le système de distribution de carburant (21) en ce qui concerne les courants massiques de carburant aux brûleurs individuels (B1, .., B6 ; Bn) sont réduites par l'insertion d'un diaphragme (27) dans une conduite de branchement (23).

5. Procédé selon la revendication 4, **caractérisé en ce qu'**

une conduite de branchement (23) est raccordée à un brûleur individuel (B1, .., B6 ; Bn) au moyen d'un raccord de conduite desserrable (24) et le vissage d'un raccord de conduite (24) est desserré, le diaphragme (27) est introduit entre l'extrémité de la conduite de branchement (23) et le raccord vissé du brûleur (B1, .., B6 ; Bn) et le raccord de conduite (24) est ensuite à nouveau vissé.

une conduite de branchement (23) est raccordée à un brûleur individuel (B1, .., B6 ; Bn) au moyen d'un

*Fig.1*

Fig. 2

Fig. 3

10

Fig.4

Fig.5